# EUROPEAN PATENT SPECIFICATION

(11) **EP 0 394 904 B1**
(45) Date of publication and mention of the grant of the patent: **27.10.1993**
(21) Application number: 90107632.3
(22) Date of filing: 23.04.1990
(51) Int. Cl.: A23L 1/10, A23L 1/304, A21D 2/02

(54) **Processed food made of iodine enriched wheat flour**
Aus mit Jod angereicherter Getreidestärke hergestelltes Nahrungsmittel
Produit alimentaire fabriqué à partir de farine de blé enrichie en iode

(30) Priority: 27.04.1989 JP 108970/89
(43) Date of publication of application: 31.10.1990
(73) Proprietor: NITTO CHEMICAL INDUSTRY CO., LTD., Tokyo (JP); UNI COLLOID KABUSHIKI KAISHA, Zushi-shi Kanagawa-ken (JP)
(72) Inventor: Miki, Takashi, Tokyo (JP); Fukatsu, Michio, Yokohama-shi, Kanagawa-ken (JP); Harada, Seiki, Zushi-shi, Kanagawa-ken (JP)
(74) Representative: Fleck, Thomas, Dr. Dipl.-Chem.

(56) References cited:
- FR-A- 2 628 944
- FOOD SCIENCE & TECHNOLOGY ABSTRACTS, 1980, AN No 80050216,INTERNATIONAL FOOD INFORMATION SERVICE; A.I.MOKHNACHEVA ,"EMULSIFYING PROPERTIES OF SEA WEEDS" & ZERNOPERERABATYVAYUSHCHAYA I PISHCHEVAYA PROMYSHLNOST, No 5, 1975, p.57-60.
- PATENT ABSTRACTS OF JAPAN vol. 11, no. 214 (C-434)(2661) 10 July 1987, & JP-A-62 32864 (AJINOMOTO) 12 February 1987,
- PATENT ABSTRACTS OF JAPAN vol. 12, no. 155 (C-494)(3002) 12 May 1988, & JP-A-62 265967 (AKIO FUJIKAWA) 18 November 1987,
- EQUINOXE no. 16, August 1987, NANTES, FRANCE pages 4 - 13; D.BRAULT, X.BRIAND: "L'algue alimentaire humaine, perspectives de développement en France"
- PATENT ABSTRACTS OF JAPAN vol. 10, no. 67 (C-333)(2124) 15 March 1986, & JP-A-60 207567 (IWATANI SANGYO) 19 October 1985,

## Description

The present invention relates to processed foods made of iodine enriched wheat flour. Such processed foods are known from Food Science and Technology Abstracts, 1980, No. 80050216, International Food Information Service; A.I. Mokhnacheva, "Emulsifying properties of sea weed".

The so-called dried Kombu (DL), however, has a number of disadvantages because it contains arginic acid and other undesirable ingredients, deteriorating the taste and consistency of wheat flour.

The object of the present invention is to enhance to above mentioned processed foods made of the iodine enriched wheat flour so that it has a better taste, flavour and consistency. Said objects is solved by the subject of claim 1.

The processed foods made of such iodine enriched wheat flour may be offered in the form as doughs, bread, cakes, cookies, biscuit, pies, noddles, etc., have minimized adversary affect to the original taste and flavor of those processed foods. In addition, the essential mineral elements needed for the maintenance of human health such as zinc, chromium, selenium, iron, copper, molybdenum, manganese, lithium, nickel, cobalt, vanadium, tin, arsenic, etc., can be taken into the body associated with iodine. The word bread as used herein means all kinds of bread such as plain bread, bean-jam bun, doughnut, French roll, buttered rol, etc..

Thus, present invention is offering the method to enrich iodine by addition of the materials originating from non-toxic sea weeds, especially originating from those sea weeds belonging to the group of Laminaria to minimized adversary effects and in congruity from the addition of iodine. Also, Laminaria Japonica and those sea weed belonging to this group is preferable because of its high iodine contend compared with other sea weeds.

Further, since the residue of said extracts are the natural food products, absolute of safety is assured. As iodine is an element intensively existing in thyroid gland of human body and constitutes a component of thyroid hormones, the shortage of iodine causing struma; hypothyroidism, etc. with the unfavorable symptoms such as the slower reflection of nervous system, obesity, activity decline, etc. is prevented.

The iodine content of processed foods made of wheat flour is normally expressed by the value in relation to the quantity of wheat flour. The iodine content expressed as I, in the processed foods under present invention is in the range of 0.05 mg to 40 mg per 100 g of wheat flour, preferable 0.1 mg to 10 mg; and more preferably 0.4 mg to 1 mg. The iodine content of more than 40 mg is not preferable since such high rate of iodine content may cause the disease due to the excess of iodine.

## Claims

1. Process for preparing foods made of iodine enriched wheat flour wherein 0,05 to 50 mg of iodine (I) derived from non-toxic sea weed(s) is contained per 100g wheat flour caracterized in that such enrichment is made by first extracting said sea weed(s) with water; alcohol or carbon dioxide and then blending the extracted residue.

2. Process according to claim 1, wherein 0.1 mg to 10 mg of iodine (I); by blending the residue of extract of water, alcohold or carbon dioxide of non-toxic sea weed or sea weed(s), is contained in 100g of wheat flour.

3. Process as set forth in claim 1; wherein such enrichment is made by blending the residue of extract of water, alcohol or carbon dioxide of Laminaria group as iodine source.

4. Process as set forth in claim 1, wherein such enrichment is made by blending the residue of extract of water, alcohol or carbon dioxide of Laminaria Japonica as iodine source.

5. Process as set forth in claim 1, wherein such processed food is dough, breads, cakes, cookies, biscuits, pies or noodles.

## Patentansprüche

1. Verfahren zum Herstellen von Lebensmitteln, die aus mit Jod angereicherter Getreidestärke hergestellt sind, wobei 0,05 bis 50 mg Jod (I), das aus nicht-toxischen Algen stammt, in 100g Getreidestärke enthalten sind, da- durch gekennzeichnet, daß eine solche Anreicherung derart durchgeführt wird, daß zuerst die Algen mit Wasser, Alkohol oder Kohlendioxid extrahiert werden und danach der extrahierte Rest zugesetzt wird.

2. Verfahren nach Anspruch 1, bei dem 0,1 mg bis 10 mg Jod (I) durch Zusetzen des mit Wasser, Alkohol oder Kohlendioxid extrahierten Restes der nicht-toxischen Algen in 100 g Getreidestärke enthalten ist.

3. Verfahren nach Anspruch 1, bei dem eine solche Anreicherung derart durchgeführt wird, daß man dem mit Wasser, Alkohol oder Kohlendioxid extrahierten Rest eine sog. Laminaria Gruppe als Jodquelle zusetzt.

4. Verfahren nach Anspruch 1, bei dem eine solche Anreicherung derart durchgeführt wird, daß man dem mit Wasser, Alkohol oder Kohlendioxid extrahierten Rest sog. Japanisches Laminaria als Jodquelle zusetzt.

5. Verfahren nach Anspruch 1, dadurch gekennzeichnet, daß das hergestellte Lebensmittel Teig, Brote, Kuchen, Kuchenbrötchen, Biscuits, Pasteten oder Torten oder Nudeln ist.

## Revendications

1. Procécé pour la fabrication d'aliments qui sont fabriqués à partir d'amidon de céréales enrichi en iode, 0,05 à 50 mg d'iode (I), qui provient d'algues non toxiques, étant contenus dans 100 g d'amidon de céréales, caractérisé en ce qu'un tel enrichissement est réalisé de telle manière que tout d'abord les algues sont extraites avec de l'eau, de l'alcool ou du gaz carbonique et que le reste extrait est ensuite ajouté.

2. Procédé selon la revendication 1 dans lequel 0,1 mg à 10 mg d'iode (I) sont contenus dans 100 g d'amidon de céréales par ajout du reste extrait des algues non toxiques avec de l'eau, de l'alcool ou du gaz carbonique.

3. Procédé selon la revendication 1 dans lequel il est réalisé un enrichissement tel que l'on ajoute au reste extrait avec de l'eau, de l'alcool ou du gaz carbonique ce qu'il est convenu d'appeler un groupe de laminaria comme source d'iode.

4. Procédé selon la revendication 1 dans lequel il est réalisé un enrichissement tel que l'on ajoute au reste extrait avec de l'eau, de l'alcool ou du gaz carbonique ce qu'il est convenu d'appeler une laminaria japonaise comme source d'iode.

5. Procédé selon la revendication 1, caractérisé en ce que l'aliment produit est de la pâte, des pains, des gâteaux, des petits pains-gâteaux, des biscuits, pâtés, tartes ou nouilles.
